# EUROPEAN PATENT APPLICATION

(11) **EP 4 302 979 A1**
(43) Date of publication of application: **10.01.2024**
(21) Application number: 23179198.9
(22) Date of filing: 14.06.2023
(51) Int. Cl.: B29D 35/14, A43B 13/12, A43B 13/04

(54) **COMPONENT OF A SOLE FOR A SHOE AND METHOD FOR PROVIDING IT**

(30) Priority: 21.06.2022 IT 202200013036
(71) Applicant: Frasson S.p.A., 31037 Loria (TV) (IT)
(72) Inventor: DE ROSSI, Alberto, 35015 GALLIERA VENETA PD (IT); FRASSON, Gianni, 35018 SAN MARTINO DI LUPARI PD (IT)
(74) Representative: Modiano, Micaela Nadia

(57) **Abstract**

A component (10) of a sole for a shoe, comprising:
- at least one first portion (11) made of EVA,
- at least one second portion (12) made of PU, associated with the at least one first portion (11).

The component (10) comprises a film (13) made of TPU for the association of the at least one second portion (12) with the at least one first portion (11) and for covering the perimeter edge (14) of the at least one second portion (12).

## Description

The present invention relates to a component of a sole for a shoe.

The invention also relates to a method for providing it.

Currently, for the provision of shoes, in particular for sports and/or technical use, it is known to use soles/mid-soles made of flexible material, which is adapted to:
- conform anatomically to the foot of the user according to the configurations that it assumes during walking/running,
- ensure an adequate level of shock absorption and comfort for the user, reducing muscular stress and loads affecting the musculoskeletal system.

The use of shoes with a sole/mid-sole made of EVA (Ethylene Vinyl Acetate) is known and commercially widespread; EVA has remarkable lightness, flexibility, and shock-absorbing capacity but at the same time a reduced compression set and limited characteristics of mechanical strength, due to which, over time, the material collapses under the weight of the user, reducing the lifespan of the product.

In the present description, the term "compression set" means the permanent deformation remaining after the removal of a force that has been applied to a material.

Moreover, the sole/mid-sole made of EVA slowly adapts to the contour of the user's foot and, for this reason, is unable to ensure adequate anatomicity during use, causing discomfort for the user.

Furthermore, EVA has modest shape memory, which leads it to deform rapidly with use and reduce its shock-absorbing capacity during walking.

The use of shoes with a sole/mid-sole made of PU (polyurethane) is known and commercially widespread: PU has remarkable mechanical strength and compression set characteristics, but reduced resistance to hydrolysis, which over time deteriorates the material, limiting the lifespan of the product.

Currently, it is complicated to combine the mechanical strength and compression set characteristics typical of PU with the lightness, flexibility and hydrolysis resistance characteristics typical of EVA.

This difficulty is increased by the incompatibility between PU and EVA, which causes, for their association, the need for long and cumbersome operations for carding the EVA, applying primers, adhesives, etc.

Moreover, such methods generate a considerable amount of waste as well as pollution and dispersion in the air of substances that are toxic to humans.

The aim of the present invention is to provide a component of a sole for a shoe and a method for providing it which are capable of improving the background art in one or more of the aspects mentioned above.

Within this aim, an object of the invention is to provide a component of a sole for a shoe that combines the characteristics of mechanical strength and compression set typical of PU with the characteristics of lightness, flexibility and resistance to hydrolysis of EVA but requires a production method that is easier and quicker than the methods for the production of similar components of the known type, producing less waste and pollution with respect to said methods.

Another object of the invention is to provide a component of a sole for a shoe and a method for providing it that allow to associate EVA and PU with a lower use of adhesive than the background art.

A further object of the invention is to provide a component of a sole for a shoe and a method for providing it that allow the mutual association of multiple portions made of different materials without generating engineered flash (which would then have to be trimmed) and obtaining a well-defined design.

A further object of the present invention is to overcome the drawbacks of the background art in a manner that is alternative to any existing solutions.

Not least object of the invention is to provide a component of a sole for a shoe and a method for providing it that are highly reliable, relatively easy to provide and at competitive costs.

This aim and these and other objects which will become better apparent hereinafter are achieved by a component of a sole for a shoe, comprising:
- at least one first portion made of EVA,
- at least one second portion made of PU, associated with said at least one first portion,
   said component being characterized in that it comprises a film made of TPU for the association of said at least second portion with said at least one first portion and for covering the perimeter edge of said at least one second portion.

This aim and these and other objects which will become better apparent hereinafter are achieved by a method for providing such a component.

Further characteristics and advantages of the invention will become better apparent from the description of a preferred but not exclusive embodiment of the component of a sole for a shoe, according to the invention, illustrated by way of non-limiting example in the accompanying drawings, wherein:
Figure 1 is a view of a component of a sole for a shoe, according to the invention;
Figures 2 and 3 are views of two successive steps of a method for providing the component of a sole for a shoe of Figure 1.

With reference to the figures, a component of a sole for a shoe according to the invention is generally designated by the reference numeral 10.

The component 10 of a sole for a shoe, in the example shown in the figures, is a platform.

The component 10 comprises:
- one or more first portions 11 made of EVA,
- a second portion 12 made of PU, associated with the first portions 11 made of EVA.

One of the particularities of the invention resides in that the component 10 comprises a film 13 made of TPU (thermoplastic polyurethane) for the association of the second portion 12 with the first portions 11 and for covering the perimeter edge 14 of the second portion 12 made of PU.

The film 13 made of TPU is interposed between the first portion 11 made of EVA and the second portion 12 made of PU and makes it possible to mutually associate PU and EVA without the need for long and cumbersome preliminary operations such as carding of the EVA and PU.

In order to associate the first portion 11, made of EVA, and the film 13, made of TPU, the first portion 11 is subjected to a treatment in order to make it compatible with PUs, such as, for example, the application of a UV primer and/or adhesive having a polyurethane base.

Van der Waals forces and hydrogen bonds then form between the treated EVA and the TPU and allow adhesion between the two different materials.

Such film 13 has a thickness comprised between 50 µm and 500 µm.

Moreover, with the component 10 the characteristics of mechanical strength and compression set typical of PU are combined with the characteristics of lightness, flexibility and resistance to hydrolysis that are typical of EVA.

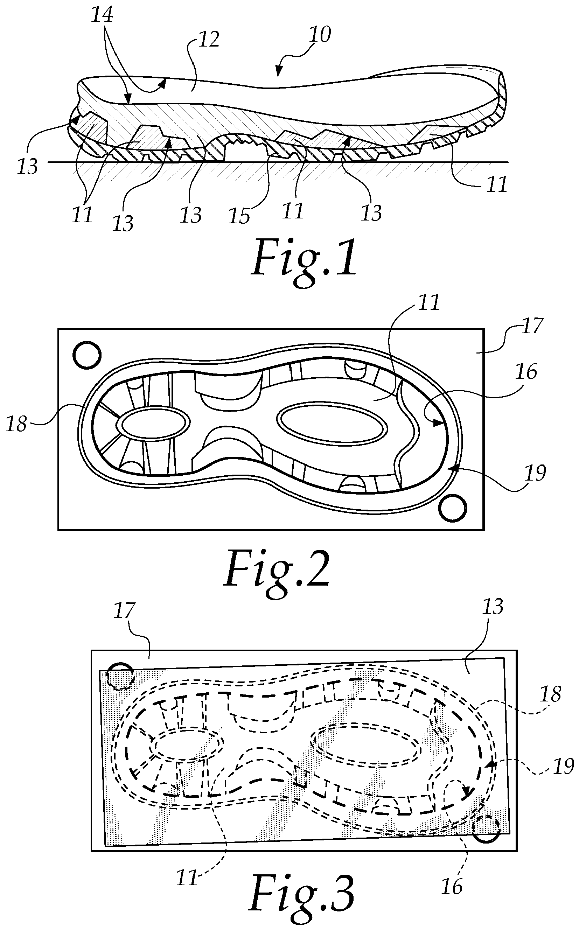

The component 10 shown in Figure 1 comprises, advantageously, a tread 15 and/or a toe cap and/or a heel seat and/or one or more inserts of another type, such as for example a support for the plantar arch.

In particular, the tread 15 is made of rubber and/or TPU and/or other polymeric material.

The tread 15 is associated with the first portion 11 on the opposite side with respect to the one directed toward the second portion 12.

In particular, for the association of the first portion 11, made of EVA, with the tread 15, made of rubber, Van der Waals forces and hydrogen bonds develop between the first portion 11 made of EVA, treated as previously shown, and the rubber (also treated with polyurethane adhesive) and allow adhesion between the two different materials.

Considering the configuration for use of the platform 10, the upper surface of the second portion 12 is the one adapted to be directed toward the upper of the shoe, not shown in the figures, to which the platform 10 is applied.

Therefore, it should be noted that the second portion 12, made of PU, in the configuration for use of the shoe, is not exposed to atmospheric agents or hydrolysis, since the film 13 made of TPU covers its perimeter edge 14.

It should also be noted that with a component 10 according to the invention it is possible to contour and/or arrange first portions 11 made of EVA in the regions in which it is preferable to have greater flexibility and lightness (for example in the heel or metatarsal region), and likewise contour the second portion 12 made of PU so as to give greater mechanical strength and compression set in the regions in which it is preferable to have said characteristics (for example in the toe region or in the plantar arch region).

The invention also relates to a method for providing the component 10.

The method for providing the component 10 consists in:
- providing one or more first portions 11 made of EVA and subjecting them to a treatment in order to render them compatible with PUs,
- inserting said one or more first portions 11 in the impression 16 of a half-mold 17 of a mold (not shown in the figures), said half-mold 17 having a vacuum sealing gasket 18 which surrounds the perimeter of the impression 16,
- positioning a film 13 made of TPU on the half-mold 17, so as to cover completely at least the region 19 delimited by the gasket 18,
- applying vacuum (by suction) inside the region 19 delimited by the gasket 18, making the film 13 adhere to the walls of the impression 16 and/or to the first portions 11 previously inserted therein,
- closing the ring of the mold,
- heating the mold to a temperature substantially comprised between 50°C and 70°C,
- pouring/injecting PU into the impression 16 covered by the film 13, forming the second portion 12,
- waiting for the second portion 12 to harden,
- opening the mold and extracting the finished component 10.

It should be noted that with a method according to the invention the forming of PU flash between the different materials during casting/injection is eliminated, since said PU is poured/injected substantially inside an enclosure constituted by the film made of TPU.

It should also be noted that with the method according to the invention, the use of release agents for removing the component 10 from the mold is limited, since there is no direct contact between the PU and said mold, causing at the same time a better surface finish than similar components provided with methods of a known type, and eliminating the need for finishing operations after molding.

The first portions 11 made of EVA can be subjected to preparatory treatments of various kind prior to their insertion in the impression 16 of the half-mold 17, such as for example the application of adhesive and/or primer and/or UV (ultraviolet) treatments, etc.

In some variations of the method according to the invention, prior to the step of inserting the first portions 11 in the impression 16 of the half-mold 17 and/or simultaneously with said step, a tread and/or a heel seat and/or a toe cap and/or the like, etc., is inserted.

In practice it has been found that the invention achieves the intended aim and objects, providing a component of a sole for a shoe that combines the characteristics of mechanical strength and compression set typical of PU with the characteristics of lightness, flexibility and resistance to hydrolysis typical of EVA, but requires a production method that is easier and quicker than the methods for the production of similar components of the known type, and producing less waste and pollution than said methods.

The invention provides a component of a sole for a shoe and a method for providing it that allow to associate EVA and PU while limiting the use of adhesives.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102022000013036 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A component (10) of a sole for a shoe, comprising:
- at least one first portion (11) made of EVA,
- at least one second portion (12) made of PU, associated with said at least one first portion (11),
said component (10) being **characterized in that** it comprises a film (13) made of TPU for the association of said second portion (12) with said at least one first portion (11) and for covering the perimeter edge (14) of said at least one second portion (12).

2. The component (10) according to claim 1, **characterized in that** said film (13) is interposed between said at least one first portion (11) and said at least one second portion (12).

3. The component (10) according to one or more of the preceding claims, **characterized in that** said film (13) has a thickness comprised between 50 µm and 500 µm.

4. The component (10) according to one or more of the preceding claims, **characterized in that** it comprises a tread (15) and/or a toe cap and/or a heel seat and/or one or more inserts.

5. The component (10) according to one or more of the preceding claims, **characterized in that** it is a platform for shoes.

6. A method for providing a component (10) according to one or more of the preceding claims, which comprises the steps of:
- providing one or more first portions (11) made of EVA and subjecting them to a treatment in order to render them compatible with the PUs,
- inserting said one or more first portions (11) in the impression (16) of a half-mold (17) of a mold, said half-mold (17) having a vacuum sealing gasket (18) which surrounds the perimeter of said impression (16),
- positioning a film (13) made of TPU on said half-mold (17), so as to cover completely at least the region (19) delimited by said gasket (18),
- applying vacuum inside said region (19) delimited by said gasket (18), making said film (13) adhere to the walls of said impression (16) and/or said one or more first portions (11) previously inserted therein,
- closing the ring of said mold,
- heating said mold to a temperature substantially comprised between 50°C and 70°C,
- pouring/injecting PU into said impression (16) covered by said film (13), forming said second portion (12),
- waiting for said second portion (12) to harden,
- opening said mold and extracting the finished component (10).

7. The method according to claim 6, **characterized in that** said at least one first portion (11) is subjected to one or more preparatory treatments, prior to its insertion in said impression (16) of said half-mold (17), said one or more preparatory treatments comprising one or more of the following treatments: application of glue, application of primer, UV treatment.

8. The method according to claim 6 or 7, **characterized in that** a tread (15) and/or a heel seat and/or a toe cap and/or one or more other inserts are inserted prior to the step of insertion of said at least one first portion (11) in said impression (16) of said half-mold (17) and/or simultaneously with said step.
